# EUROPEAN PATENT SPECIFICATION

(11) **EP 4 167 174 B1**
(45) Date of publication and mention of the grant of the patent: **29.04.2026**
(21) Application number: 21948690.9
(22) Date of filing: 22.09.2021
(51) Int. Cl.: G06Q 50/20, G09B 9/00, G09B 19/00, G06Q 50/26, G06Q 10/06, G06Q 50/40

(54) **METHOD AND DEVICE FOR DYNAMIC CALCULATION OF PARAMETERS BASED ON CTC SIMULATION TRAINING PROCESS**
VERFAHREN ZUR DYNAMISCHEN PARAMETERBERECHNUNG AUF DER BASIS EINES CTC-SIMULATIONSTRAININGSVERFAHRENS UND VORRICHTUNG DAFÜR
PROCÉDÉ ET DISPOSITIF DE CALCUL DYNAMIQUE DE PARAMÈTRES SUR LA BASE D'UN PROCESSUS DE FORMATION PAR SIMULATION CTC

(30) Priority: 29.07.2021 CN 202110863864
(43) Date of publication of application: 19.04.2023
(73) Proprietor: CASCO SIGNAL LTD., Shanghai 200071 (CN)
(72) Inventor: WANG, Xingli, Shanghai 200071 (CN); DING, Changzheng, Shanghai 200071 (CN); ZHANG, Yu, Shanghai 200071 (CN); WANG, Lei, Shanghai 200071 (CN); WANG, Qinlan, Shanghai 200071 (CN); SUN, Xiongfeng, Shanghai 200071 (CN); GUO, Huan, Shanghai 200071 (CN); LIU, Jun, Shanghai 200071 (CN)
(74) Representative: Sun, Yiming
(86) International application number: PCT/CN2021/119525
(87) International publication number: WO 2023/004970

(56) References cited:
- CN-A- 109 788 036
- CN-A- 111 081 356
- CN-A- 111 736 967
- CN-A- 111 736 967
- CN-A- 112 464 435
- CN-A- 112 464 435
- US-A1- 2003 130 834

## Description

### FIELD OF TECHNOLOGY

The present invention relates to the field of rail transit emergency response simulation, and in particular to a dynamic parameter calculation method based on a CTC simulation training procedure and an apparatus thereof.

### BACKGROUND

At present, the standard response procedure template established for performing emergency scenario response training for train railway dispatching commanders is mainly static. Stations, equipment, signal status and vehicles that need to be processed are all fixed, and only specific fault procedures can be simulated, lacking universality and versatility.

In the dispatching command scenario, the stations are of different types. In addition, section screen, CTC operation information, equipment information, route information, fault information, train information adjusted in real time on the running chart and train status change at every moment. Therefore, the emergency response procedure should not only be able to relate to specific station equipment and car running information, but also be applicable to various stations and car running scenarios, and therefore can be used a plurality of times. In addition, it is necessary to ensure the independence and high scalability of the edited content in the response procedure, which are lacked in various simulation training projects.

Through retrieval, the Chinese Patent Application CN202011185003.9 discloses a simulation processing method of a CTC simulation system emergency response procedure representation. In this method, the CTC simulation system emergency response procedure representation is divided into a fixed part and a dynamic part, and the specific calculation and update processes of the dynamic part are provided. The fixed part can be used to represent standard operating procedures and terms, and the dynamic part can be used to represent variable information related to specific failure scenarios. This invention resolves the shortcomings of the static procedure, can adapt to the change of the fault position and the number of running trains, and provides the simulation of the emergency response procedure that is closer to the reality use scenario. However, the emergency response procedure established by this invention is not standardized enough, and the applicability is not strong enough. The calculating process of some of dynamic parameters is performed in a single-branch manner, which brings about the defects of parameter accuracy and real-time performance.

### SUMMARY

An objective of the present invention is to overcome the foregoing defects of the related art, and provide a dynamic parameter calculation method based on a CTC simulation training procedure with strong applicability, high real-time performance, and high accuracy.

The objective of the present invention can be implemented by using the following technical solutions:
According to a first aspect of the present invention, a dynamic parameter calculation method based on a CTC simulation training procedure is provided, including the following steps:
step S₁: establishing a parameterized multi-branch emergency response procedure template; and
step S₂: performing dynamic parameter calculation and substitution on CTC data by using a combinatorial computational branching method.

In a preferred technical solution, step 2 includes the following steps:
step S₂₁: obtaining run chart information by using a CTC run chart server interface;
step S₂₂: obtaining representation information by using a CTC station representation server interface;
step S₂₃: obtaining CTC operation information by using a CTC event server interface;
step S₂₄: obtaining data information of each station based on existing CTC data; and
step S₂₅: obtaining, gathering, and calculating, by a calculation terminal, information, where a specific calculation triggering process is decided based on loading and flowing of the parameterized multi-branch emergency response procedure template.

In a preferred technical solution, step S₂₅ includes the following sub-steps:
step S₂₅₁: loading the parameterized multi-branch emergency response procedure template, reading content of an initial parameter calculation node, and initiating an initial parameter calculation request;
step S₂₅₂: recording, by the calculation terminal, a next initial parameter calculation request, and starting a periodic calculation;
step S₂₅₃: sending, by the calculation terminal after completing each round of periodic calculation, a calculation result with a change in value, to replace a reserved word in the parameterized multi-branch emergency response procedure template;
step S₂₅₄: automatically cleaning, by the calculation terminal after completing each round of periodic calculation, a single-calculation node in a calculation queue;
step S₂₅₅: initiating a process parameter calculation request after content of the parameterized multi-branch emergency response procedure template flows to a process parameter calculation node;
step S₂₅₆: recording, by the calculation terminal, a next calculation request, and repeatedly performing steps S₂₅₃ to S₂₅₅;
step S₂₅₇: after the content of the parameterized multi-branch emergency response procedure template flows to a node terminating a plurality of calculations or when software determines timing for terminating a plurality of calculations, sending a request to terminate a plurality of specified computations; and
step S₂₅₈: cleaning, by the calculation terminal after receiving the request to terminate a plurality of computations, the plurality of calculations terminated as requested.

In a preferred technical solution, the parameterized multi-branch emergency response procedure template in step 2 includes dynamic-parameter reserved words, calculation branches, one to fifth input parameters, and specific values.

In a preferred technical solution, the dynamic-parameter reserved words include specific train number, equipment, signal status, fault information, and route information; and the dynamic-parameter reserved words are replaced with specific values obtained through dynamic parameter calculation.

In a preferred technical solution, an initial parameter calculation node in step S₂₅₁ is located in an initial position of the parameterized multi-branch emergency response procedure template, and when the loading is performed at the initial position of the parameterized multi-branch emergency response procedure template, dynamic parameter calculation is started and the dynamic-parameter reserved word is replaced with a specific value.

In a preferred technical solution, the process parameter calculation node in step S₂₅₅ is located in the parameterized multi-branch emergency response procedure template, and after the parameterized multi-branch emergency response procedure template flows to such step, calculation is triggered and the dynamic-parameter reserved word is replaced with a specific value.

In a preferred technical solution, the parameterized multi-branch emergency response procedure template in step 2 further includes a single-calculation node, a multi-calculation node, and a node terminating a plurality of calculations, and these nodes are specified by parameters thereof, where
the single-calculation node performs calculation only once, and does make a change any more after a specific value is replaced;
the multi-calculation node performs updating in real time and replaces a specific value obtained through calculation; and
the node terminating a plurality of calculations is filled in after a value of a multi-calculation node does not need to be changed any more, and a plurality of specified calculations are terminated after a procedure flows to such node.

In a preferred technical solution, the node terminating a plurality of calculations is a non-essential option, and timing to terminate a plurality of computations is automatically determined by a program.

In a preferred technical solution, the combinatorial computational branching method in step 2 specifically includes: taking a calculation result of a branch as an input parameter of another branch on the condition that a combination relationship between calculation branches exists, and obtaining a final calculation result by performing calculation by a combination of a plurality of branches.

In a preferred technical solution, the calculation terminal in step S₂₅ maintains a calculation queue and a result mapping table, where intermediate results of branch calculations and a final result are all stored in the result mapping table, a specific value of a required parameter is read from the result mapping table when each branch calculation is started, and content in the result mapping table is updated after the branch calculations.

According to a second aspect of the present invention, an apparatus for the dynamic parameter calculation method based on a CTC simulation training procedure is provided, including:
a template establishing module, configured to establish the parameterized multi-branch emergency response procedure template; and
a module for dynamic parameter calculation and substitution, configured to perform the dynamic parameter calculation and substitution on CTC data by using the combinatorial computational branching method.

According to a third aspect of the present invention, an electronic device is provided, including a memory and a processor, where a computer program is stored on the memory, and when executing the program, the processor performs the method described above.

According to a fourth aspect of the present invention, a computer readable storage medium is provided, storing a computer program, where when executing the program, the processor performs the method described above.

Compared with the related art, the present invention has the following advantages.
1) In the present invention, a parameterized multi-branch emergency response procedure template is designed, such that an emergency response procedure template can be applied to each dispatching station or station environment, and can be used in all station environments after one edit;
2) In the present invention, a dynamic parameter calculation solution is designed. The parameters of the emergency response process template can be replaced with specific values in real time. The procedure content may change with the change of the station.
3) In the present invention, the built-in calculation branch allows a calculation result of the branch to be an input parameter of another branch, which reduces the quantity of calculation branches and allows the combination of calculation branches to calculate other results.
4) The data and information in the present invention are derived from real CTC data, which greatly enhances the authenticity of the scenario.

### BRIEF DESCRIPTION OF THE DRAWINGS

FIG. 1 shows a combination of dynamic calculation information flows.
FIG. 2 is a flowchart of a dynamic calculation procedure.
FIG. 3 shows a calculation process triggered by an emergency response procedure flow.

### DESCRIPTION OF THE EMBODIMENTS

The technical solutions of the embodiments of the present invention are clearly described below with reference to the accompanying drawings in the present invention. Apparently, the described embodiments are some rather than all of the embodiments of the present invention. All other embodiments obtained by a person of ordinary skill in the art on the basis of the embodiments of the present invention without creative efforts shall fall within the protection scope of the present invention.

In the present invention, a dynamic parameter calculation method based on a CTC simulation training procedure is provided, including the following steps:
step S₁: Establish a parameterized multi-branch emergency response procedure template.
Step S₂: Perform dynamic parameter calculation and substitution on CTC data by using a combinatorial computational branching method.

Step S₁ of establishing the parameterized multi-branch emergency response procedure template specifically includes the following steps:
Step S₁₁: A procedure structure presentation form in the emergency response procedure template includes a branch structure, a determining condition, a sequential structure, and a parallel structure, where a procedure direction can be selected by an actual value obtained through parameter calculation.
Step S₁₂: Present dynamic parameters such as specific train number, equipment, signal status, fault information, and route information in the emergency response procedure template in the form of reserved words, and replace these dynamic parameters after specific values are calculated. The emergency response procedure template includes an initial parameter calculation node and a process parameter calculation node, and further includes a single-calculation node and a multi-calculation node, or a node terminating a plurality of calculations according to the quantity of calculations. Each node includes element information for calculating the specific value of each reserved word.

Step S₁₂ specifically includes the following steps:
Step S₁₂₁: The emergency response procedure template includes dynamic-parameter reserved words, calculation branches, one to fifth input parameters, and specific values, where the dynamic-parameter reserved word is taken as a parameter filled in during a specific procedure.
Step S₁₂₂: Put the initial parameter calculation node at the beginning of the emergency response procedure template, and start calculation when the procedure is loaded and replacement is performed using a specific value; and put the process parameter calculation node in steps of the procedure, and after the emergency response procedure flows to this step, trigger calculation and perform replacement using a specific value.
Step S₁₂₃: Specify the single-calculation node and the multi-calculation node by using parameters thereof, where the single-calculation node performs calculation only once, and does make a change any more after a specific value is replaced; and the multi-calculation node updates a calculation result in real time and replaces a specific value obtained through calculation; and fill in the node terminating a plurality of calculations after a value of a multi-calculation node does not need to be changed any more, and terminate a plurality of specified calculations after a procedure flows to such node, where the node terminating a plurality of calculations is a non-essential option, and software allows timing for terminating a plurality of calculations to be determined automatically.

Step S₂ of performing the dynamic parameter calculation and substitution on CTC data by using the combinatorial computational branching method specifically includes the following steps:
Step S₂₁: Obtain run chart information by using a CTC run chart server interface.
Step S₂₂: Obtain representation information by using a CTC station representation server interface.
Step S₂₃: Obtain CTC operation information by using a CTC event server interface.
Step S₂₄: Obtain data information of each station based on existing CTC data.
Step S₂₅: A calculation terminal of the software obtains, gathers, and calculates information, where a specific calculation triggering process is decided based on loading and flowing of the emergency response procedure.

Step S₂₅ specifically includes the following steps:
Step S₂₅₁: Load the emergency response procedure template, read content of an initial parameter calculation node, and initiate an initial parameter calculation request.
Step S₂₅₂: The calculation terminal records a next calculation request, and starts a periodic calculation within 1s to 20s.
Step S₂₅₃: After completing each round of periodic calculation, the calculation terminal sends a calculation result with a change in value, to replace a reserved word in the emergency response procedure template, where a value may change from being null to being valid, or values of two calculations may be different.
step S₂₅₄: automatically cleaning, by the calculation terminal after completing each round of periodic calculation, a single-calculation node in a calculation queue;
Step S₂₅₅: Initiate a process calculation request after content of the emergency response procedure template flows to a process calculation node.
Step S₂₅₆: The calculation terminal records a next calculation request, and repeatedly performs steps S₂₅₃ to S₂₅₅.
Step S₂₅₇: After the content of the emergency response procedure template flows to a node terminating a plurality of calculations or when software determines timing for terminating a plurality of calculations, send a request to terminate a plurality of specified computations, where each termination calculation request is only for one calculation.
Step S₂₅₈: After receiving the request to terminate a plurality of computations, the calculation terminal cleans the plurality of calculations terminated as requested.

The combinatorial computational branching method includes the following steps:
Step S₃₁: Take a calculation result of a branch as an input parameter of another branch on the condition that a combination relationship between calculation branches exists, and obtain a final calculation result by performing calculation by a combination of a plurality of branches.
Step S₃₂: The calculation terminal maintains a calculation queue and a result mapping table, where intermediate results of branch calculations and a final result are all stored in the result mapping table, a specific value of a required parameter is read from the result mapping table when each branch calculation is started, and content in the result mapping table is updated after the branch calculations.

The present invention is described in detail below with reference to the drawings.

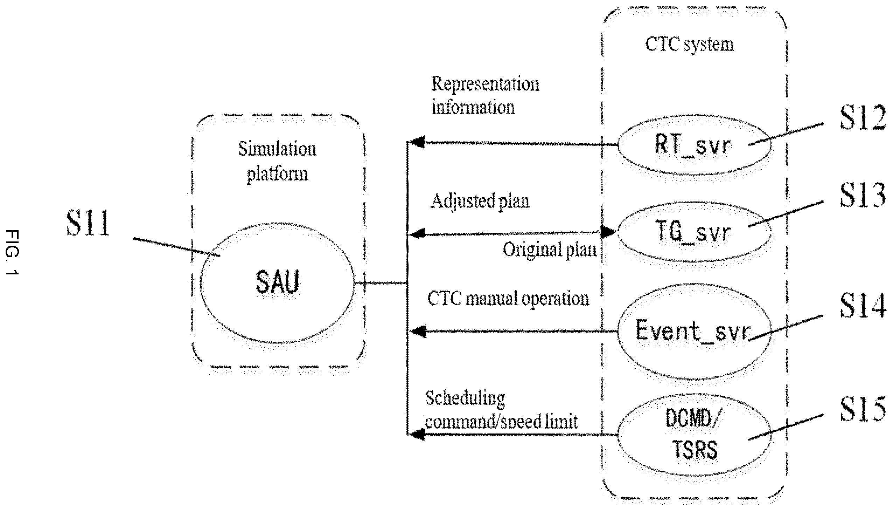

FIG. 1 shows an information source and an information flow of information required for dynamic calculation. FIG. 1 shows SAU loaded on calculation terminal of the system platform in S11 of the present invention. In S12 to S15, information responding to these software in the CTC system of software stations such as a server, a run chart server, an event server, software for scheduling command and controlling and limiting train speed are sent to the calculation terminal for calculating.

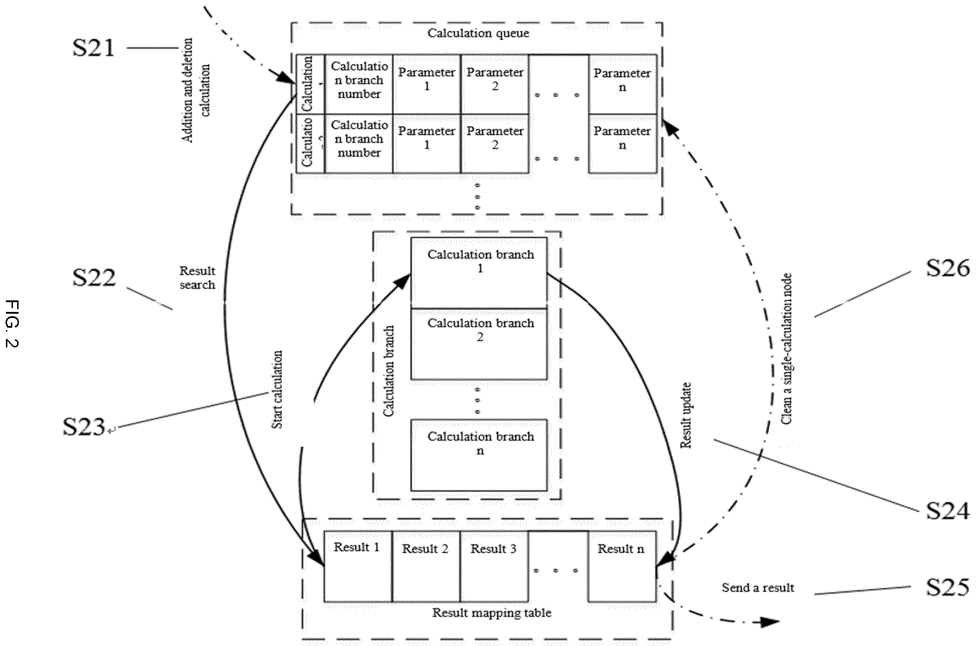

FIG. 2 is a flowchart of a dynamic calculation procedure, specifically including the following steps:
Step S21: Initiate a dynamic calculation request or a request to terminate a plurality of calculations after the emergency response procedure flows to a calculation node, and if it is a calculation request, insert relevant information of the calculation request into the calculation queue, or it is a termination request, delete a specified multi-calculation node from the calculation queue.
Step S22: Read a calculation node from the calculation queue, search a result mapping table for an input parameter of the calculation node, determine whether the input parameter is a result value of a previous calculation, and replace the input parameter with a specific value if it is.
Step S23: Start a calculation, search for a calculation branch corresponding to the calculation node, and enter the calculation branch to perform a relevant business calculation.
Step S24: Obtain a calculation result after the calculation, and update a value in the result mapping table.
Step S25: Check a change in the value of the result mapping table, and send a changed value.
Step S26: Check whether a calculation node in the calculation queue is a single-calculation node, and delete the node from the queue if it is.

In each periodic calculation, steps S22 to S26 are repeated, and in S21, the emergency response procedure flows to a calculation node to trigger calculation.

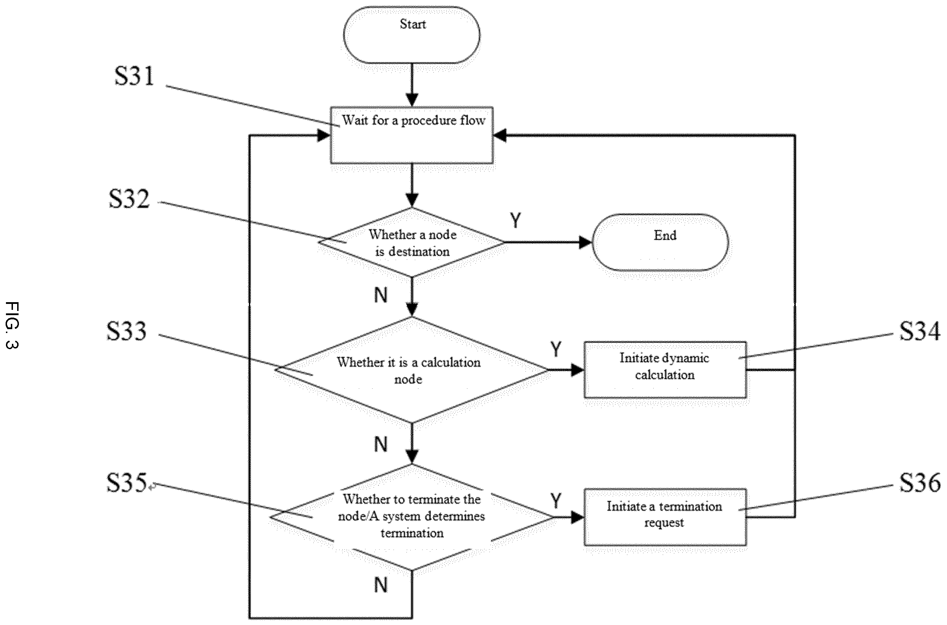

FIG. 3 shows a calculation process triggered by an emergency response procedure flow, specifically including the following steps:
Step S31: Wait for a flow of an emergency response procedure, and perform step S32 if the flow arrives.
Step S32: Determine whether a flowed procedure node is destination, and end the overall emergency response procedure if it is; otherwise, perform step S33.
Step S33: Determine whether the flowed procedure node is a settlement node, and perform step S34 if it is; otherwise, perform step S35.
Step S34: Initiate a dynamic calculation request, and perform step S31, so that S31 to S34 are performed cyclically.
Step S35: Determine whether the flowed node is a node requested to terminate a plurality of calculations, and perform step S36 if it is; otherwise, perform step S31, such that S31 to S35 are performed cyclically.
Step S36: Initiate a request of a node terminating a plurality of calculations, and perform step S31, so that S31 to S36 are performed cyclically.

The above describes the method embodiments, and the solutions of the present invention are further described below through the apparatus embodiments.

In the present invention, an apparatus for the dynamic parameter calculation method based on a CTC simulation training procedure is provided, and includes:
a template establishing module, configured to establish the parameterized multi-branch emergency response procedure template; and
a module for dynamic parameter calculation and substitution, configured to perform the dynamic parameter calculation and substitution on CTC data by using the combinatorial computational branching method.

Those skilled in the art can clearly understand that, for the convenience and brevity of the description, and for the specific operation process of the described modules, reference may be made to the corresponding processes in the foregoing method embodiments. Details are not described herein.

The electronic device of the present invention includes a central processing unit (CPU) that can perform various proper actions and processing according to computer program instructions in read-only memory (ROM) or computer program instructions loaded from a storage unit into random-access memory (RAM). In the RAM, various programs and data required for device operation can also be stored. The CPU, ROM, and RAM are connected to each other via a bus. Input/output (I/O) interfaces are also connected to the bus.

Various components in the device are connected to the I/O interfaces, including: input units such as a keyboard and a mouse; output units such as various types of displays and speakers; storage units such as a magnetic disk and an optical disk; and communication units such as a network card, a modem, and a wireless communication transceiver. The communication unit allows the device to exchange information/data with other devices through a computer network such as the Internet and/or various telecommunication networks.

The processing unit executes the various steps of the foregoing method, for example, steps S₁ and S₂. For example, in some embodiments, steps S₁ and S₂ may be implemented as a computer software program tangibly embodied on a machine-readable medium such as a storage unit. In some embodiments, some or all of the computer programs may be loaded and/or installed on the device by using the ROM and/or the communication unit. When the computer program is loaded into the RAM and executed by the CPU, one or more sub-steps of steps S₁ and S₂ may be performed. Alternatively, in other embodiments, the CPU may be configured to perform steps S₁ and S₂ in any other suitable manner (for example, by means of firmware).

The functions described herein above may be performed, at least partly, by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logic device (CPLD), and the like.

Program code for implementing the method of the present invention may be written in any combination of one or more programming languages. These program code may be provided for a processor or controller of a general purpose computer, a special purpose computer, or other programmable data processing apparatus, such that the program code, when executed by a processor or controller, causes the functions/operations specified in the flowcharts and/or block diagrams to be carried out. The program code may be executed on a machine entirely or partly, partly on the machine and partly on a remote machine when being an independent software package, or entirely on the remote machine or a server.

In the context of the present invention, a machine-readable medium may be a tangible medium that may include or store a program for use by or in connection to an instruction execution system, an apparatus, or a device. The machine-readable medium may be a machine-readable signal medium or a machine-readable storage medium. The machine-readable media may include, but are not limited to, an electronic, magnetic, optical, electromagnetic, infrared, or semiconductor system, an apparatus, or a device, or any suitable combination of the foregoing. More specific examples of machine-readable storage media would include one or more wire-based electrical connections, a portable computer disk, a hard disk, a random-access memory (RAM), a read-only memory (ROM), an erasable programmable read-only memory (EPROM or flash memory), an optical fiber, a compact disc read-only memory (CD-ROM), an optical storage device, a magnetic storage device, or any suitable combination of the foregoing.

The above descriptions are only specific implementations of the present invention, but the protection scope of the present invention is not limited thereto. Any person skilled in the art can easily think of various equivalents within the technical scope disclosed by the present invention. Modifications or substitutions should be included within the protection scope of the present invention. Therefore, the protection scope of the present invention should be subject to the protection scope of the claims.

## Claims

1. A dynamic parameter calculation method based on a CTC simulation training procedure, comprising the following steps:
step S₁: establishing a parameterized multi-branch emergency response procedure template; and
step S₂: performing dynamic parameter calculation and substitution on CTC data by using a combinatorial computational branching method,
wherein the parameterized multi-branch emergency response procedure template in step S₁ comprises dynamic-parameter reserved words, calculation branches, one to fifth input parameters, and specific values,
wherein the dynamic-parameter reserved words comprise specific train number, equipment, signal status, fault information, and route information; and the dynamic-parameter reserved words are replaced with specific values obtained through dynamic parameter calculation,
wherein the computational method in step S₂ is a combinational computational branching method and specifically comprises: taking a calculation result of a branch as an input parameter of another branch on the condition that a combination relationship between calculation branches exists, and obtaining a final calculation result by performing calculation by a combination of a plurality of branches,
wherein step S₂ comprises the following steps:
step S₂₁: obtaining run chart information by using a CTC run chart server interface;
step S₂₂: obtaining representation information by using a CTC station representation server interface;
step S₂₃: obtaining CTC operation information by using a CTC event server interface;
step S₂₄: obtaining data information of each station based on existing CTC data; and
step S₂₅: obtaining, gathering, and using for calculation, by a calculation terminal, the information, wherein a specific calculation triggering process is decided based on loading and flowing of the parameterized multi-branch emergency response procedure template.

2. The dynamic parameter calculation method based on a CTC simulation training procedure according to claim 1, wherein step S₂₅ comprises the following sub-steps:
step S₂₅₁: loading the parameterized multi-branch emergency response procedure template, reading content of an initial parameter calculation node, and initiating an initial parameter calculation request;
step S₂₅₂: recording, by the calculation terminal, a next initial parameter calculation request, and starting a periodic calculation;
step S₂₅₃: sending, by the calculation terminal after completing each round of periodic calculation, a calculation result with a change in value, to replace a reserved word in the parameterized multi-branch emergency response procedure template;
step S₂₅₄: automatically cleaning, by the calculation terminal after completing each round of periodic calculation, a single-calculation node in a calculation queue;
step S₂₅₅: initiating a process parameter calculation request after content of the parameterized multi-branch emergency response procedure template flows to a process parameter calculation node;
step S₂₅₆: recording, by the calculation terminal, a next calculation request, and repeatedly performing steps S₂₅₃ to S₂₅₅;
step S₂₅₇: after the content of the parameterized multi-branch emergency response procedure template flows to a node terminating a plurality of calculations or when software determines timing for terminating a plurality of calculations, sending a request to terminate a plurality of specified computations; and
step S₂₅₈: cleaning, by the calculation terminal after receiving the request to terminate a plurality of computations, the plurality of calculations terminated as requested.

3. The dynamic parameter calculation method based on a CTC simulation training procedure according to claim 1, wherein an initial parameter calculation node in step S₂₅₁ is located in an initial position of the parameterized multi-branch emergency response procedure template, and when the loading is performed at the initial position of the parameterized multi-branch emergency response procedure template, dynamic parameter calculation is started and the dynamic-parameter reserved word is replaced with a specific value.

4. The dynamic parameter calculation method based on a CTC simulation training procedure according to claim 2, wherein the process parameter calculation node in step S₂₅₅ is located in the parameterized multi-branch emergency response procedure template, and after the parameterized multi-branch emergency response procedure template flows to such step, calculation is triggered and the dynamic-parameter reserved word is replaced with a specific value.

5. The dynamic parameter calculation method based on a CTC simulation training procedure according to claim 1, wherein the parameterized multi-branch emergency response procedure template in step S₂ further comprises a single-calculation node, a multi-calculation node, and a node terminating a plurality of calculations, and these nodes are specified by parameters thereof, wherein
the single-calculation node performs calculation only once, and does make a change any more after a specific value is replaced;
the multi-calculation node performs updating in real time and replaces a specific value obtained through calculation; and
the node terminating a plurality of calculations is filled in after a value of a multi-calculation node does not need to be changed any more, and a plurality of specified calculations are terminated after a procedure flows to such node.

6. The dynamic parameter calculation method based on a CTC simulation training procedure according to claim 3, wherein the node terminating a plurality of calculations is a non-essential option, and timing to terminate a plurality of computations is automatically determined by a program.

7. The dynamic parameter calculation method based on a CTC simulation training procedure according to claim 1, wherein the calculation terminal in step S₂₅ maintains a calculation queue and a result mapping table, wherein intermediate results of branch calculations and a final result are all stored in the result mapping table, a specific value of a required parameter is read from the result mapping table when each branch calculation is started, and content in the result mapping table is updated after the branch calculations.

8. An apparatus for the dynamic parameter calculation method based on a CTC simulation training procedure according to claim 1, comprising:
a template establishing module, configured to establish the parameterized multi-branch emergency response procedure template; and
a module for dynamic parameter calculation and substitution, configured to perform the dynamic parameter calculation and substitution on CTC data by using the combinatorial computational branching method.

9. An electronic device, comprising a memory and a processor, wherein a computer program is stored on the memory, and when executing the program, the processor performs the method according to any one of claims 1 to 7.

10. A computer readable storage medium, storing a computer program, wherein when executing the program, the processor performs the method according to any one of claims 1 to 7.

## Patentansprüche

1. Dynamisches Parameterberechnungsverfahren auf der Grundlage eines CTC-Simulationstrainingsablaufs, umfassend die folgenden Schritte:
Schritt S₁: Erstellen einer parametrierten mehrverzweigten Notfallreaktionsablaufvorlage; und
Schritt S₂: Durchführen einer dynamischen Parameterberechnung und -ersetzung an CTC-Daten unter Verwendung eines kombinatorischen Berechnungsverzweigungsverfahrens,
wobei die parametrierte mehrverzweigte Notfallreaktionsablaufvorlage in Schritt S₁ Reserveschlüsselwörter für dynamische Parameter, Berechnungszweige, erste bis fünfte Eingabeparameter und spezifische Werte umfasst,
wobei die Reserveschlüsselwörter für dynamische Parameter eine spezifische Zugnummer, Ausrüstung, Signalstatus, Fehlerinformationen und Routeninformationen umfassen; und die Reserveschlüsselwörter für dynamische Parameter durch spezifische Werte ersetzt werden, die durch dynamische Parameterberechnung erhalten werden,
wobei das Berechnungsverfahren in Schritt S₂ ein kombinatorisches Berechnungsverzweigungsverfahren ist und im Einzelnen umfasst: Verwenden eines Berechnungsergebnisses eines Zweigs als Eingabeparameter eines anderen Zweigs unter der Bedingung, dass eine Kombinationsbeziehung zwischen Berechnungszweigen besteht, und Erhalten eines endgültigen Berechnungsergebnisses durch Durchführen einer Berechnung mittels einer Kombination einer Mehrzahl von Zweigen,
wobei Schritt S₂ die folgenden Schritte umfasst:
Schritt S₂₁: Erhalten von Laufdiagramminformationen unter Verwendung einer CTC-Laufdiagramm-Serverschnittstelle;
Schritt S₂₂: Erhalten von Darstellungsinformationen unter Verwendung einer CTC-Stationsdarstellungs-Serverschnittstelle;
Schritt S₂₃: Erhalten von CTC-Betriebsinformationen unter Verwendung einer CTC-Ereignis-Serverschnittstelle;
Schritt S₂₄: Erhalten von Dateninformationen jeder Station auf der Grundlage vorhandener CTC-Daten; und
Schritt S₂₅: Erhalten, Sammeln und Verwenden der Informationen zur Berechnung durch ein Berechnungsterminal, wobei ein spezifischer Berechnungsauslöseprozess auf der Grundlage des Ladens und Ablaufs der parametrierten mehrverzweigten Notfallreaktionsablaufvorlage entschieden wird.

2. Dynamisches Parameterberechnungsverfahren auf der Grundlage eines CTC-Simulationstrainingsablaufs nach Anspruch 1, wobei Schritt S₂₅ die folgenden Unterschritte umfasst:
Schritt S₂₅₁: Laden der parametrierten mehrverzweigten Notfallreaktionsablaufvorlage, Lesen eines Inhalts eines initialen Parameterberechnungsknotens und Auslösen einer initialen Parameterberechnungsanforderung;
Schritt S₂₅₂: Aufzeichnen einer nächsten initialen Parameterberechnungsanforderung durch das Berechnungsterminal und Starten einer periodischen Berechnung;
Schritt S₂₅₃: Senden eines Berechnungsergebnisses mit einer Wertänderung durch das Berechnungsterminal nach Abschluss jeder Runde der periodischen Berechnung, um ein Reserveschlüsselwort in der parametrierten mehrverzweigten Notfallreaktionsablaufvorlage zu ersetzen;
Schritt S₂₅₄: automatisches Bereinigen eines Einzelberechnungsknotens in einer Berechnungswarteschlange durch das Berechnungsterminal nach Abschluss jeder Runde der periodischen Berechnung;
Schritt S₂₅₅: Auslösen einer Prozessparameterberechnungsanforderung, nachdem ein Inhalt der parametrierten mehrverzweigten Notfallreaktionsablaufvorlage zu einem Prozessparameterberechnungsknoten abläuft;
Schritt S₂₅₆: Aufzeichnen einer nächsten Berechnungsanforderung durch das Berechnungsterminal und wiederholtes Durchführen der Schritte S₂₅₃ bis S₂₅₅;
Schritt S₂₅₇: Senden einer Anforderung zum Beenden einer Mehrzahl spezifizierter Berechnungen, nachdem der Inhalt der parametrierten mehrverzweigten Notfallreaktionsablaufvorlage zu einem Knoten abläuft, der eine Mehrzahl von Berechnungen beendet, oder wenn eine Software einen Zeitpunkt zum Beenden einer Mehrzahl von Berechnungen bestimmt; und
Schritt S₂₅₈: Bereinigen der auf Anforderung beendeten Mehrzahl von Berechnungen durch das Berechnungsterminal nach Erhalten der Anforderung zum Beenden einer Mehrzahl von Berechnungen.

3. Dynamisches Parameterberechnungsverfahren auf der Grundlage eines CTC-Simulationstrainingsablaufs nach Anspruch 1, wobei der initiale Parameterberechnungsknoten in Schritt S₂₅₁ sich in einer Anfangsposition der parametrierten mehrverzweigten Notfallreaktionsablaufvorlage befindet, und wenn das Laden an der Anfangsposition der parametrierten mehrverzweigten Notfallreaktionsablaufvorlage durchgeführt wird, eine dynamische Parameterberechnung gestartet wird und das Reserveschlüsselwort für dynamische Parameter durch einen spezifischen Wert ersetzt wird.

4. Dynamisches Parameterberechnungsverfahren auf der Grundlage eines CTC-Simulationstrainingsablaufs nach Anspruch 2, wobei der Prozessparameterberechnungsknoten in Schritt S₂₅₅ sich in der parametrierten mehrverzweigten Notfallreaktionsablaufvorlage befindet, und nachdem die parametrierte mehrverzweigte Notfallreaktionsablaufvorlage zu einem solchen Schritt abläuft, eine Berechnung ausgelöst wird und das Reserveschlüsselwort für dynamische Parameter durch einen spezifischen Wert ersetzt wird.

5. Dynamisches Parameterberechnungsverfahren auf der Grundlage eines CTC-Simulationstrainingsablaufs nach Anspruch 1, wobei die parametrierte mehrverzweigte Notfallreaktionsablaufvorlage in Schritt S₂ ferner einen Einzelberechnungsknoten, einen Mehrfachberechnungsknoten und einen Knoten zum Beenden einer Mehrzahl von Berechnungen umfasst, und diese Knoten durch deren Parameter festgelegt sind, wobei
der Einzelberechnungsknoten die Berechnung nur einmal durchführt und nach dem Ersetzen eines spezifischen Werts keine Änderung mehr vornimmt;
der Mehrfachberechnungsknoten eine Aktualisierung in Echtzeit durchführt und einen durch Berechnung erhaltenen spezifischen Wert ersetzt; und
der Knoten zum Beenden einer Mehrzahl von Berechnungen eingetragen wird, nachdem ein Wert eines Mehrfachberechnungsknotens nicht mehr geändert werden muss, und eine Mehrzahl spezifizierter Berechnungen beendet wird, nachdem ein Ablauf zu einem solchen Knoten erfolgt.

6. Dynamisches Parameterberechnungsverfahren auf der Grundlage eines CTC-Simulationstrainingsablaufs nach Anspruch 3, wobei der Knoten zum Beenden einer Mehrzahl von Berechnungen eine nicht wesentliche Option ist und ein Zeitpunkt zum Beenden einer Mehrzahl von Berechnungen automatisch durch ein Programm bestimmt wird.

7. Dynamisches Parameterberechnungsverfahren auf der Grundlage eines CTC-Simulationstrainingsablaufs nach Anspruch 1, wobei das Berechnungsterminal in Schritt S₂₅ eine Berechnungswarteschlange und eine Ergebnismappingtabelle aufrechterhält, wobei Zwischenergebnisse von Zweigberechnungen und ein Endergebnis alle in der Ergebnismappingtabelle gespeichert sind, ein spezifischer Wert eines benötigten Parameters aus der Ergebnismappingtabelle gelesen wird, wenn jede Zweigberechnung gestartet wird, und ein Inhalt in der Ergebnismappingtabelle nach den Zweigberechnungen aktualisiert wird.

8. Vorrichtung für das dynamische Parameterberechnungsverfahren auf der Grundlage eines CTC-Simulationstrainingsablaufs nach Anspruch 1, umfassend:
ein Vorlagenerstellungsmodul, das dazu ausgebildet ist, die parametrierte mehrverzweigte Notfallreaktionsablaufvorlage zu erstellen; und
ein Modul zur dynamischen Parameterberechnung und -ersetzung, das dazu ausgebildet ist, die dynamische Parameterberechnung und -ersetzung an CTC-Daten unter Verwendung des kombinatorischen Berechnungsverzweigungsverfahrens durchzuführen.

9. Elektronische Vorrichtung, umfassend einen Speicher und einen Prozessor, wobei ein Computerprogramm in dem Speicher gespeichert ist und der Prozessor, wenn er das Programm ausführt, das Verfahren nach einem der Ansprüche 1 bis 7 durchführt.

10. Computerlesbares Speichermedium, das ein Computerprogramm speichert, wobei der Prozessor, wenn er das Programm ausführt, das Verfahren nach einem der Ansprüche 1 bis 7 durchführt.

## Revendications

1. Procédé de calcul dynamique de paramètres sur la base d'une procédure d'entraînement de simulation CTC, comprenant les étapes suivantes :
étape S₁ : établir un modèle paramétré de procédure de réponse d'urgence à branches multiples ; et
étape S₂ : effectuer un calcul dynamique de paramètres et un remplacement de paramètres sur des données CTC au moyen d'une méthode combinatoire de branchement de calcul,
dans lequel le modèle paramétré de procédure de réponse d'urgence à branches multiples de l'étape S₁ comprend des mots réservés de paramètres dynamiques, des branches de calcul, des premier à cinquième paramètres d'entrée, et des valeurs spécifiques,
dans lequel les mots réservés de paramètres dynamiques comprennent un numéro de train spécifique, un équipement, un état de signal, des informations de défaut, et des informations d'itinéraire ; et les mots réservés de paramètres dynamiques sont remplacés par des valeurs spécifiques obtenues par calcul dynamique de paramètres,
dans lequel la méthode de calcul à l'étape S₂ est une méthode combinatoire de branchement de calcul et comprend spécifiquement : prendre un résultat de calcul d'une branche comme paramètre d'entrée d'une autre branche à la condition qu'une relation de combinaison entre des branches de calcul existe, et obtenir un résultat de calcul final en effectuant un calcul par une combinaison d'une pluralité de branches,
dans lequel l'étape S₂ comprend les étapes suivantes :
étape S₂₁ : obtenir des informations de diagramme de circulation en utilisant une interface de serveur de diagramme de circulation CTC ;
étape S₂₂ : obtenir des informations de représentation en utilisant une interface de serveur de représentation de station CTC ;
étape S₂₃ : obtenir des informations d'exploitation CTC en utilisant une interface de serveur d'événements CTC ;
étape S₂₄ : obtenir des informations de données de chaque station sur la base de données CTC existantes ; et
étape S₂₅ : obtenir, rassembler, et utiliser pour le calcul, par un terminal de calcul, les informations, dans lequel un processus spécifique de déclenchement du calcul est décidé sur la base du chargement et de l'écoulement du modèle paramétré de procédure de réponse d'urgence à branches multiples.

2. Procédé de calcul dynamique de paramètres sur la base d'une procédure d'entraînement de simulation CTC selon la revendication 1, dans lequel l'étape S₂₅ comprend les sous-étapes suivantes :
étape S₂₅₁ : charger le modèle paramétré de procédure de réponse d'urgence à branches multiples, lire un contenu d'un nœud de calcul de paramètre initial, et initier une demande de calcul de paramètre initial ;
étape S₂₅₂ : enregistrer, par le terminal de calcul, une demande suivante de calcul de paramètre initial, et démarrer un calcul périodique ;
étape S₂₅₃ : envoyer, par le terminal de calcul après l'achèvement de chaque cycle de calcul périodique, un résultat de calcul avec un changement de valeur, pour remplacer un mot réservé dans le modèle paramétré de procédure de réponse d'urgence à branches multiples ;
étape S₂₅₄ : nettoyer automatiquement, par le terminal de calcul après l'achèvement de chaque cycle de calcul périodique, un nœud de calcul unique dans une file d'attente de calcul ;
étape S₂₅₅ : initier une demande de calcul de paramètre de processus après qu'un contenu du modèle paramétré de procédure de réponse d'urgence à branches multiples s'écoule vers un nœud de calcul de paramètre de processus ;
étape S₂₅₆ : enregistrer, par le terminal de calcul, une demande de calcul suivante, et effectuer de manière répétée les étapes S₂₅₃ à S₂₅₅ ;
étape S₂₅₇ : après que le contenu du modèle paramétré de procédure de réponse d'urgence à branches multiples s'écoule vers un nœud mettant fin à une pluralité de calculs ou lorsque le logiciel détermine un moment pour mettre fin à une pluralité de calculs, envoyer une demande de terminaison d'une pluralité de calculs spécifiés ; et
étape S₂₅₈ : nettoyer, par le terminal de calcul après réception de la demande de terminaison d'une pluralité de calculs, la pluralité de calculs terminés à la demande.

3. Procédé de calcul dynamique de paramètres sur la base d'une procédure d'entraînement de simulation CTC selon la revendication 1, dans lequel le nœud de calcul de paramètre initial dans l'étape S₂₅₁ est situé dans une position initiale du modèle paramétré de procédure de réponse d'urgence à branches multiples, et lorsque le chargement est effectué à la position initiale du modèle paramétré de procédure de réponse d'urgence à branches multiples, un calcul dynamique de paramètres est démarré et le mot réservé de paramètre dynamique est remplacé par une valeur spécifique.

4. Procédé de calcul dynamique de paramètres sur la base d'une procédure d'entraînement de simulation CTC selon la revendication 2, dans lequel le nœud de calcul de paramètre de processus dans l'étape S₂₅₅ est situé dans le modèle paramétré de procédure de réponse d'urgence à branches multiples, et après que le modèle paramétré de procédure de réponse d'urgence à branches multiples s'écoule vers une telle étape, le calcul est déclenché et le mot réservé de paramètre dynamique est remplacé par une valeur spécifique.

5. Procédé de calcul dynamique de paramètres sur la base d'une procédure d'entraînement de simulation CTC selon la revendication 1, dans lequel le modèle paramétré de procédure de réponse d'urgence à branches multiples à l'étape S₂ comprend en outre un nœud de calcul unique, un nœud de calcul multiple, et un nœud mettant fin à une pluralité de calculs, et ces nœuds sont spécifiés par leurs paramètres, dans lequel
le nœud de calcul unique n'effectue le calcul qu'une seule fois, et n'effectue plus de modification après qu'une valeur spécifique est remplacée ;
le nœud de calcul multiple effectue une mise à jour en temps réel et remplace une valeur spécifique obtenue par calcul ; et
le nœud mettant fin à une pluralité de calculs est rempli après qu'une valeur d'un nœud de calcul multiple n'a plus besoin d'être modifiée, et une pluralité de calculs spécifiés sont terminés après qu'une procédure s'écoule vers un tel nœud.

6. Procédé de calcul dynamique de paramètres sur la base d'une procédure d'entraînement de simulation CTC selon la revendication 3, dans lequel le nœud mettant fin à une pluralité de calculs est une option non essentielle, et un moment pour mettre fin à une pluralité de calculs est automatiquement déterminé par un programme.

7. Procédé de calcul dynamique de paramètres sur la base d'une procédure d'entraînement de simulation CTC selon la revendication 1, dans lequel le terminal de calcul à l'étape S₂₅ maintient une file d'attente de calcul et une table de mappage de résultats, dans laquelle des résultats intermédiaires de calculs de branches et un résultat final sont tous stockés dans la table de mappage de résultats, une valeur spécifique d'un paramètre requis est lue à partir de la table de mappage de résultats lorsque chaque calcul de branche est démarré, et un contenu dans la table de mappage de résultats est mis à jour après les calculs de branches.

8. Appareil pour le procédé de calcul dynamique de paramètres sur la base d'une procédure d'entraînement de simulation CTC selon la revendication 1, comprenant :
un module d'établissement de modèle, configuré pour établir le modèle paramétré de procédure de réponse d'urgence à branches multiples ; et
un module de calcul dynamique de paramètres et de remplacement, configuré pour effectuer le calcul dynamique de paramètres et le remplacement sur des données CTC au moyen de la méthode combinatoire de branchement de calcul.

9. Dispositif électronique, comprenant une mémoire et un processeur, dans lequel un programme informatique est stocké dans la mémoire, et lorsque le programme est exécuté, le processeur exécute le procédé selon l'une quelconque des revendications 1 à 7.

10. Support de stockage lisible par ordinateur stockant un programme informatique, dans lequel lorsque le programme est exécuté, le processeur exécute le procédé selon l'une quelconque des revendications 1 à 7.
